**Europäisches Patentamt**

**European Patent Office**

**Office européen des brevets**

(11) Veröffentlichungsnummer : **0 063 325**
**B1**

(12) **EUROPÄISCHE PATENTSCHRIFT**

(45) Veröffentlichungstag der Patentschrift :
30.07.86

(51) Int. Cl.⁴ : **B 60 R 19/00, B 60 J 5/04**

(21) Anmeldenummer : **82103041.8**

(22) Anmeldetag : **08.04.82**

(54) **Aufprallträger für Fahrzeugtüren.**

(30) Priorität : **16.04.81 AT 1734/81**

(43) Veröffentlichungstag der Anmeldung :
**27.10.82 Patentblatt 82/43**

(45) Bekanntmachung des Hinweises auf die Patenterteilung : **30.07.86 Patentblatt 86/31**

(84) Benannte Vertragsstaaten :
**CH DE FR GB IT LI SE**

(56) Entgegenhaltungen :
**EP-A- 0 010 641**
**US-A- 3 791 693**

(73) Patentinhaber : **Austria Metall Aktiengesellschaft**

**A-5282 Braunau am Inn (AT)**

(72) Erfinder : **Koser, Jaroslav, Dipl.-Ing.**
**Klosterstrasse 12**
**A-5282 Ranshofen (AT)**
Erfinder : **Laimighofer, Johann**
**Sparkassenstrasse 15**
**A-5280 Braunau am Inn (AT)**

(74) Vertreter : **Hain, Leonhard, Dipl.-Ing.**
**Tal 18/IV**
**D-8000 München 2 (DE)**

## Beschreibung

Die Erfindung betrifft einen Aufprallträger für Fahrzeugtüren aus einem am Türrahmen befestigbaren Profil-Formstück aus einer Leichtmetallegierung.

Es ist in der Praxis bekannt, die Fahrzeugtüren durch aufgeschweißte Blechprofile oder Stahlrohre zu versteifen. Während Blechprofile bei großem Aufwand nur relativ geringen Schutz gewährleisten, führen Stahlrohre zu einer unerwünschten Gewichtserhöhung. Bei einer bekannten Fahrzeugtür gemäß dem Oberbegriff des Patentanspruches 1 (US-A-3 791 693) ist zur Verstärkung der Fahrzeugtür ein ein- oder mehrteiliges Hohlkasten-Profil aus Leichtmetall so vorgesehen, daß die Tür in eine obere und eine untere Schale unterteilt wird. Dadurch muß auf ein absenkbares Fenster verzichtet werden und außerdem wird die Gestaltung der Türaußenwand ungünstig beeinflußt. Da dieses bekannte Hohlkasten-Profil mehrere Zwischenstege und Hohlkammern aufweist, ist es recht aufwendig und teuer in der Herstellung und zudem auch schwierig einzubauen.

Der Erfindung liegt daher die Aufgabe zugrunde, einen Aufprallträger aus Leichtmetall zu schaffen, der sich durch eine besonders einfache und billige Gestaltung auszeichnet und dennoch höchste Verformungswiderstände gewährleistet.

Diese Aufgabe wird an einem Aufprallträger der eingangs genannten Art gemäß der Erfindung durch die kennzeichnenden Merkmale des Patentanspruches 1 gelöst.

Weitere Merkmale der Erfindung sind in Unteransprüchen beansprucht.

Der erfindungsgemäße Aufprallträger weist einen besonders einfachen Querschnitt sowie geringes Gewicht auf. Er zeichnet sich außerdem durch einen überraschend großen Verformungswiderstand aus. Sein Profil erleichtert den Einbau in eine Fahrzeugtür und da er nur wenig Platz in Anspruch nimmt, beeinträchtigt er die Türkonstruktion nicht.

Die Erfindung wird nachfolgend anhand eines Ausführungsbeispiels, das auch in der Zeichnung im Schema dargestellt ist, näher beschrieben. Es zeigen :

Figur 1 eine Längsansicht des Aufprallträgers mit einer angedeuteten Tür und

Figur 2 eine Stirnansicht dieses Aufprallträgers.

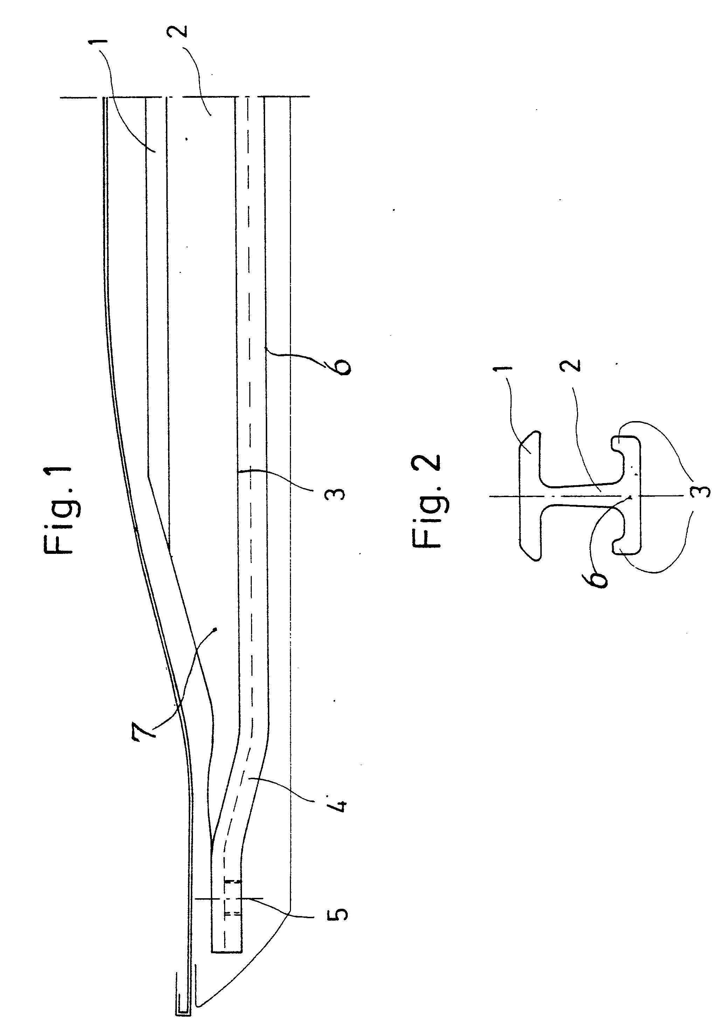

Wie insbesondere Fig. 2 der Zeichnung erkennen läßt, weist der Aufprallträger die Querschnittsform eines I-Profiles auf, dessen Innenflansch 1 an seinen Flanschenden abgerundet ist, um in einer Längssicke eines Außenwand-Türbleches (nicht dargestellt) Platz finden zu können. Sein Steg 2 verdickt sich nach außen hin zu einem Außenflansch 6, der an seinen Enden einwärts gerichtete Rand-Verdickungen 3 aufweist, die ihme eine höhere Knickfestigkeit verleihen. Außerdem bieten diese Randverdickungen eine bessere Halterung für eine außen am Außenwand-Türblech anzubringende Abdeckleiste (nicht dargestellt). Das Profil-Formstück ist an seinen Enden 7 abgeflacht, bei 4 leicht gebogen, bzw. gekröpft und mit einer Bohrung 5 zum Anschrauben an einen Türrahmen (nicht dargestellt) versehen, weshalb es zu Reparaturzwecken leicht abmontiert werden kann. Im eingebauten Zustand wird das Profil-Formstück von der Abdeckleiste aus Gummi oder Kunststoff zur Gänze überdeckt, so daß es nicht sichtbar ist. Das Profil-Formstück wird vorzugsweise aus einer aushärtbaren Al-Mg-Zn-Legierung hergestellt.

## Patentansprüche

1. Aufprallträger für Fahrzeugtüren, bestehend aus einem am Türrahmen befestigbaren Profil-Formstück aus einer Leichtmetallegierung, dadurch gekennzeichnet, daß das Profil-Formstück ein I-Profil ist, dessen Außenflansch (6) einwärts gerichtete Randverdickungen (3) aufweist.

2. Aufprallträger nach Anspruch 1, dadurch gekennzeichnet, daß der Profilsteg (2) zum Außenflansch (6) hin eine sich allmählich verstärkende Verdickung aufweist.

3. Aufprallträger nach Anspruch 1 oder 2, dadurch gekennzeichnet, daß der Innenflansch (1) an seinen Enden abgerundet ist.

4. Aufprallträger nach einem der Ansprüche 1 bis 3, dadurch gekennzeichnet, daß seine Enden (7) bis zum Außenflansch (6) hin abgeflacht und in diesem Außenflansch Bohrungen (5) zum Anbringen von Befestigungsschrauben ausgebildet sind.

## Claims

1. Shock beam for vehicle doors, having a profile piece of light metal alloy which can be fixed to the door frame, characterized in that the profile piece is an I-section whose external flange (6) has on its edges inwardly directed thickenings (3).

2. Shock beam according to claim 1, characterized in that the profile web (2) has a part becoming thicker and thicker towards the external flange (6).

3. Shock beam according to claim 1 or 2, characterized in that the internal flange (1) has rounded ends.

4. Shock beam according to one of the claims 1 to 3, characterized in that its ends (7) are flattened up to the external flange (6) and that in said external flange bores (5) are provided for the application of fastening screws.

## Revendications

1. Poutre anti-chocs pour portes de véhicule, comportant un élément profilé en un alliage de métal léger, mis en forme pour être fixé au cadre d'une porte, poutre caractérisée en ce que l'élément profilé mis en forme est confectionné à partir d'un profilé en I, dont la semelle extérieure (6) présente sur ses bords des bourrelets (3) en saillie vers l'intérieur.

2. Poutre anti-chocs conforme à la revendication 1, caractérisé en ce que l'âme (2) du profilé en I présente une section qui va en s'épaississant progressivement vers la semelle extérieure (6).

3. Poutre anti-chocs conforme à l'une des revendications 1 ou 2, caractérisée en ce que la semelle intérieure (1) du profilé en I a des bords arrondis.

4. Poutre anti-chocs conforme à l'une des revendications 1 à 3, caractérisée en ce qu'elle comporte des extrémités (7) qui vont en s'aplatissant jusqu'à la semelle extérieure (6), et en ce que des trous (5) pour le passage de vis de fixation sont prévus dans la semelle extérieure (6).

# Fig. 1

# Fig. 2

0 063 325